# EUROPEAN PATENT APPLICATION

(11) **EP 4 373 210 A1**
(43) Date of publication of application: **22.05.2024**
(21) Application number: 22842171.5
(22) Date of filing: 14.07.2022
(51) Int. Cl.: H05B 6/10, H05B 6/40, H05B 6/44

(54) **INDUCTION HEATING DEVICE, AND HEATING METHOD FOR STABILIZER**

(30) Priority: 16.07.2021 JP 2021118035
(71) Applicant: NHK Spring Co., Ltd., Yokohama-shi, Kanagawa 236-0004 (JP)
(72) Inventor: YOSHIDA, Atsuki, Yokohama-shi, Kanagawa 236-0004 (JP); YAMAUCHI, Yuichiro, Yokohama-shi, Kanagawa 236-0004 (JP); MIZUTA, Hidetoshi, Yokohama-shi, Kanagawa 236-0004 (JP)
(74) Representative: AWA Sweden AB
(86) International application number: PCT/JP2022/027686
(87) International publication number: WO 2023/286829

(57) **Abstract**

An induction heating device (20) according to one embodiment includes a first coil portion (30) and a second coil portion (40). A bar-shaped workpiece is placed between the first coil portion (30) and the second coil portion (40). The first coil portion (30) includes a pair of first narrow pitch portions (71,72) formed in respective end portions thereof, a first wide pitch portion (73,74) formed between the first narrow pitch portions (71,72), and a first medium pitch portion (75) formed in the center. The second coil portion (40) includes a pair of second narrow pitch portions (111,112) formed in respective end portions, a second wide pitch portion (113,114) formed between the second narrow pitch portions (111,112), and a second medium pitch portion (115) formed in the center.

## Description

### Technical Field

The present invention relates generally to an induction heating device which heats bar-shaped workpieces such as metal rods and steel pipes by means of a high-frequency induction coil, and to a method for heating stabilizers.

### Background Art

Stabilizer devices to be installed in the suspension mechanism of a vehicle includes a stabilizer made from a steel-made rod or a hollow material and a support for supporting the stabilizer to the vehicle body. The stabilizer includes a torsion unit which extends in a width direction of the vehicle and a pair of arm units connected to respective ends of the torsion unit via bend portions. An example of the support unit is a pair of bush units with a rubber bush. Via the bush units, the stabilizer is supported onto the vehicle body. Distal end portions of the arms are connected to a suspension member or the like via a connecting member.

In order to fix the rubber bush to the stabilizer, for example, a thermosetting adhesive may be used. In such cases, a longitudinal part of the stabilizer(, which is a bush attachment portion) is heated. The rubber bush to which the adhesive is applied is placed over the heated stabilizer. Then, the adhesive cures while the rubber bush is being pressurized.

In order to heat a longitudinal part of a bar-shaped workpiece, a high-frequency induction heating device may be used. For example, the high-frequency induction heating device discussed in Patent Literature 1 has a pair of induction heating coils. Generally, induction heating coils are constituted by conductors wound at the same pitch.

### Citation List

### Patent Literature

Patent Literature 1: JP 6832312 B

### Summary of Invention

### Technical Problem

It has been found that the following problems occur when a longitudinal part of a bar-shaped workpiece is heated evenly by a conventional induction heating coil.

That is, when the to-be-heated part of a bar-shaped workpiece is heated by a conventional induction heating coil (a coil with a constant pitch), the to-be-heated part is heated with an approximately uniform heat generation density within the width of the coil. However, from immediately after the start of heating, part of the heat escapes to the surroundings of the to-be-heated part due to the heat transfer effect. As a result, the temperatures near both ends of the to-be-heated part to becomes lower than that near the central portion of the to-be-heated part.

To attach a rubber bush to the heated stabilizer, the stabilizer needs to be transported to the rubber bush attachment stage. Here, it is inevitable that the temperature of the bush attachment area (the to-be-heated part) drops during the transfer. In particular, the temperature near both ends of the bush attachment part drops. Therefore, it is necessary to control the temperature during heating so that the temperature of the bush attachment part is maintained at the curing temperature of the adhesive.

Stabilizers are subjected to shot peening to impart compressive residual stress thereto to increase their durability. When stabilizers are heated to the permissive temperature or the higher, the above-described compressive residual stress will dissipate. Therefore, it is necessary to control the temperature so that the temperature of the to-be-heated part does not exceed the permissive value. Further, when adhering the rubber bush, the to-be-heated part need to be kept at a temperature at which the adhesive cures. Under these circumstances, it is conventionally difficult to carry out temperature control, and there has been room for improvement.

An object of this invention is to provide an induction heating device which can heat the to-be-heated part of a bar-shaped workpiece, such as a stabilizer, to a nearly uniform temperature.

### Solution to Problem

One of embodiments is an induction heating device for heating a to-be-heated part of a bar-shaped workpiece such as a stabilizer, which includes a first coil and a second coil. The first coil includes a first coil portion comprising a plurality of turn portions and a first axis passing through the center of the first coil portion. The second coil includes a second coil portion comprising a plurality of turn portions and a second axis passing through the center of the second coil portion. The first coil portion and the second coil portion may each have an even number of turns or an odd number of turns. Between the first coil portion and the second coil portion, a workpiece placement section is formed.

The first coil includes a pair of first narrow pitch portions formed in respective end portions of the first coil portion and a first wide pitch portion formed between the pair of first narrow pitch portions and having a pitch is wider than that of the first narrow pitch portion. Further, the second coil includes a pair of second narrow pitch portions formed in respective end portions of the second coil portion and a second wide pitch portion formed between the pair of second narrow pitch portions and having a pitch wider than that of the second narrow pitch portion.

The induction heating device of this embodiment may include a first medium pitch portion formed in the center of the first coil portion and a second medium pitch portion formed in the center of the second coil portion. The pitch of the first medium pitch portion is wider than that of the first narrow pitch portion and narrower than that of the first wide pitch portion. The pitch of the second medium pitch portion is wider than that of the second narrow pitch portion and narrower than that of the second wide pitch portion.

Each of the turn portions of the first coil portion may include a first side portion opposing the workpiece placement section, a second side portion on a side opposite to the workpiece placement section, an upper third side portion, and a lower fourth side portion. As viewing the first coil portion from a direction of a side, the first side portions may be parallel to each other and the first side portions may each extend in a direction perpendicular to the first axis. The first coil portion may be inclined with respect to the workpiece placement section. Each of the turn portions of the second coil portion may include a fifth side portion opposing the workpiece placement section, a sixth side portion opposing the workpiece placement section, an upper seventh side portion and a lower eighth side portion. As viewing the second coil portion from a direction from a side, the fifth side portions may be parallel to each other and the fifth side portions may each extend in a direction perpendicular to the second axis. The second coil portion may be inclined with respect to the workpiece placement section.

In one example of the first coil portion, the third side portions may be parallel to each other and the third side portions each may extend in a direction perpendicular to the first axis as the first coil portion is viewed from above. The fourth side portions may be parallel to each other and the fourth side portions may each extend in a direction perpendicular to the first axis. When the first coil portion is viewed from a direction of a side, the second side portion has a first pitch angle in accordance with the first narrow pitch portion and the first wide pitch portion. Note that the third side portion or the fourth side portion may have the first pitch angle. In one example of the second coil portion, the seventh side portions may be parallel to each other and the seventh side portions may each extend in a direction perpendicular to the second axis when the second coil portion is viewed from above. Further, the eighth side portions may be parallel to each other and the eighth side portions may each extend in a direction perpendicular to the second axis. When the second coil portion is viewed from a direction of a side, the sixth side portion has a second pitch angle in accordance with the second narrow pitch portion and the second wide pitch portion. Note that the seventh side portion or the eighth side portion may have the second pitch angle.

One embodiment of an induction heating device may include a frame structure made of an electrically insulating material, a first positioning member provided on each of the turn portions of the first coil portion and a second positioning member provided on each of the turn portions of the second coil portion. The first positioning member and the second positioning member are fixed to the frame structure.

The induction heating device may include a feeder conductor that is electrically connected with the first coil portion, a connecting conductor that electrically connects the first coil portion and the second coil portion to each other, and a conductor adjacent portion in which the feeder conductor and the connecting conductor are adjacent to each other and extend in the same direction. In the conductor adjacent portion, the feeder conductor and the connecting conductor are arranged so that the direction of the current flowing through the feeder conductor and the direction of the current flowing through the connecting conductor are opposite to each other.

### Advantageous Effects of Invention

According to the induction heating device of this embodiment, it is possible to heat a longitudinal part of a bar-shaped workpiece, such as a stabilizer for a vehicle, for example, to a nearly uniform temperature range.

### Brief Description of Drawings

FIG. 1 is a perspective view schematically showing a part of a vehicle and a stabilizer.
FIG. 2 is a perspective view showing a part of the stabilizer shown in FIG. 1 and a rubber bush.
FIG. 3 is a perspective view showing a part of the induction heating device according to the first embodiment.
FIG. 4 is a plan view of the induction heating device shown in FIG. 3.
FIG. 5 is a front view of the induction heating device shown in FIG. 3.
FIG. 6 is a side view of a first coil taken along line F6-F6 in FIG. 5.
FIG. 7 is a side view of a second coil taken along line F7-F7 in FIG. 5.
FIG. 8 is a perspective view showing the induction heating device shown in FIG. 3 when assembled to a frame structure.
FIG. 9 is a diagram showing a relationship between a location of a to-be-heated part heated by the induction heating device and a heat generation density.
FIG. 10 is a diagram showing the relationship between the location and temperature of the to-be-heated part after stopping of heating by the induction heating device.
FIG. 11 is a plan view of a part of an induction heating device according to the second embodiment.
FIG. 12 is a diagram showing the relationship between the location of the to-be-heated part heated by the induction heating device shown in FIG. 11 and the heat generation density.
FIG. 13 is a diagram showing the relationship between the location and temperature of the to-be-heated part after stopping the heating by the induction heating device shown in FIG. 11.

### Mode for Carrying Out the Invention

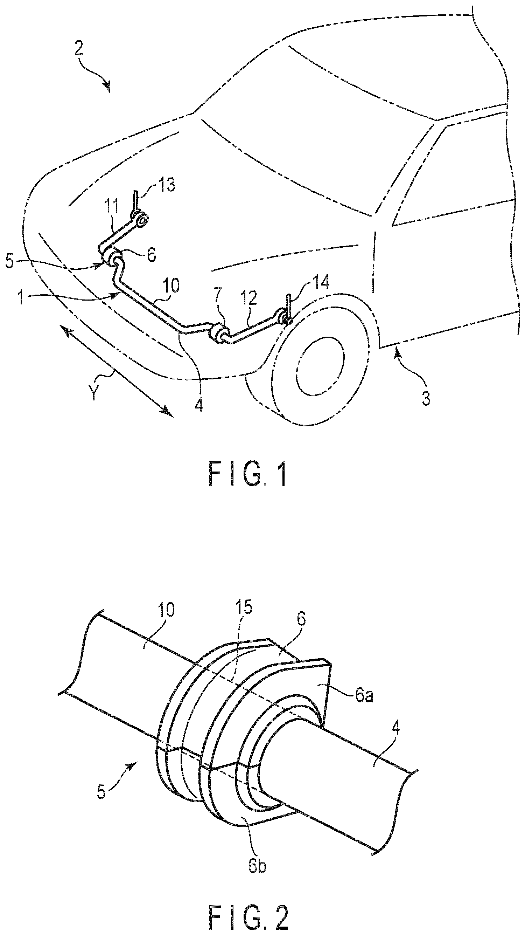

An induction heating device of the first embodiment will be described below with reference to FIGS. 1 to 10.

FIG. 1 shows a part of a vehicle 2 equipped with a stabilizer device 1. The stabilizer device 1 comprises a solid or hollow stabilizer 4 made of steel and a support unit 5 that supports the stabilizer 4 to a vehicle body 3. The stabilizer 4 extends in the width direction (the direction indicated by an arrow Y) of the vehicle body 3. One example of the support unit 5 comprises a pair of rubber bushes 6 and 7. The stabilizer 4 is an example of a bar-shaped workpiece.

The stabilizer 4 includes a torsion unit 10 extending in the width direction of the vehicle body 3 and a pair of arm units 11 and 12. The torsion unit 10 is supported on a part of the vehicle body 3, for example, via the rubber bushes 6 and 7. The arm units 11 and 12 are connected to a suspension mechanism via connecting members 13 and 14. To increase the durability, the stabilizer 4 are subjected to shot peening to impart a compressive residual stress thereto. A resin-based coating film is applied on the surface of stabilizer 4.

The pair of rubber bushes 6 and 7 have structures common to each other. One rubber bush 6 is shown as a representative example in FIG. 2. The rubber bush 6 is adhered to a longitudinal part (a bush attachment portion) of the stabilizer 4 by means of a thermosetting adhesive 15. One example of the rubber bush 6 shown in FIG. 2 is constituted by a pair of two divided parts, namely, a first bush piece 6a and a second bush piece 6b.

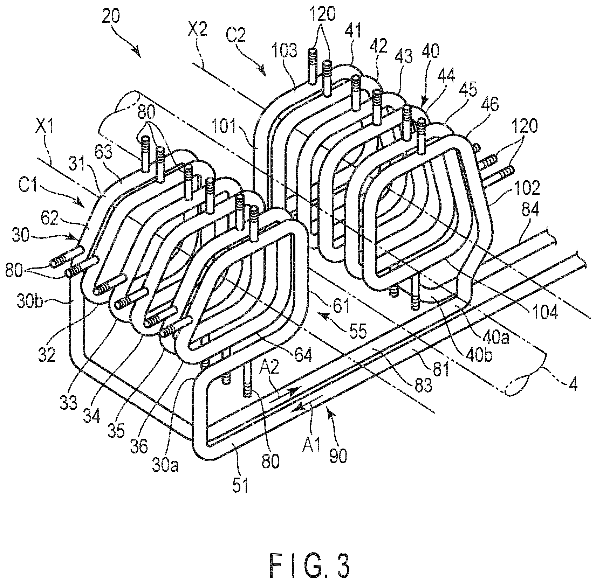

When attaching the rubber bush 6 onto the stabilizer 4, the bush attachment portion of the stabilizer 4 is heated by an induction heating device 20 (shown in FIGS. 3 to 8). The inner surfaces of the first bush piece 6a and the second bush piece 6b are coated with a thermosetting adhesive in advance. The first bush piece 6a and the second bush piece 6b are overlaid on the bush attachment portion heated to a predetermined temperature, and the adhesive 15 cures while being pressurized.

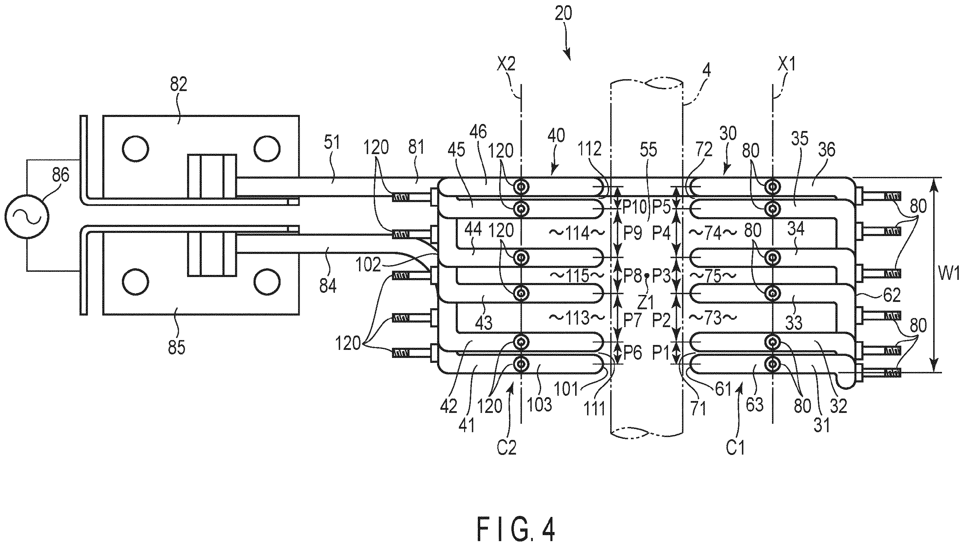

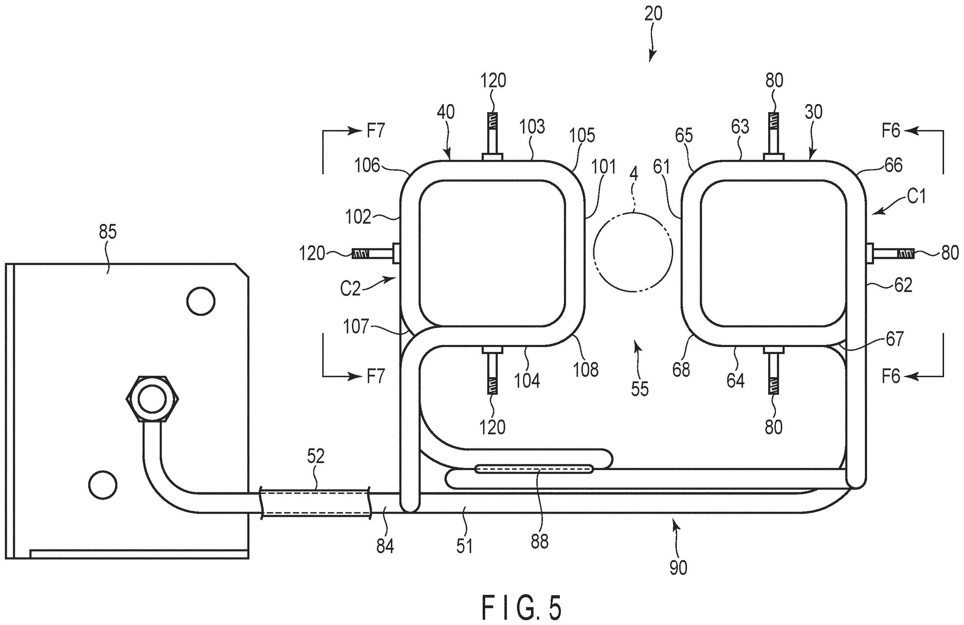

FIGS. 3 to 8 show the induction heating device 20 according to the first embodiment. FIG. 3 is a perspective view showing a part of the induction heating device 20, FIG. 4 is a plan view of the induction heating device 20, and FIG. 5 is a front view of the induction heating device 20.

The induction heating device 20 comprises a first coil C1 and a second coil C2. The first coil C1 contains a first coil portion 30 including a plurality (for example, six) of turn portions 31, 32, 33, 34, 35 and 36. The first coil portion 30 includes a first axis X1 (shown in FIGS. 3 and 4) passing through the centers of the turn portions 31, 32, 33, 34, 35 and 36. When the first coil portion 30 is viewed from the front side as shown in FIG. 5, the turn portions 31 to 36 have shapes equivalent to each other (rounded regular squares).

The second coil C2 contains a second coil portion 40 including a plurality (for example, six) of turn portions 41, 42, 43, 44, 45 and 46. The second coil portion 40 includes a second axis X2 (shown in FIGS. 3 and 4) passing through the centers of the turn portions 41, 42, 43, 44, 45 and 46. When the second coil portion 40 is viewed from the front side as shown in FIG. 5, the turn portions 41 to 46 have shapes equivalent to each other (rounded regular squares).

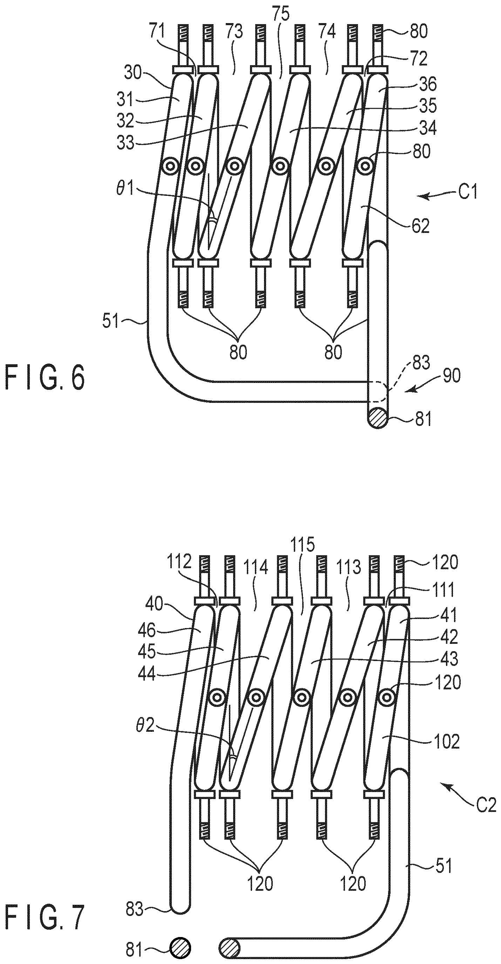

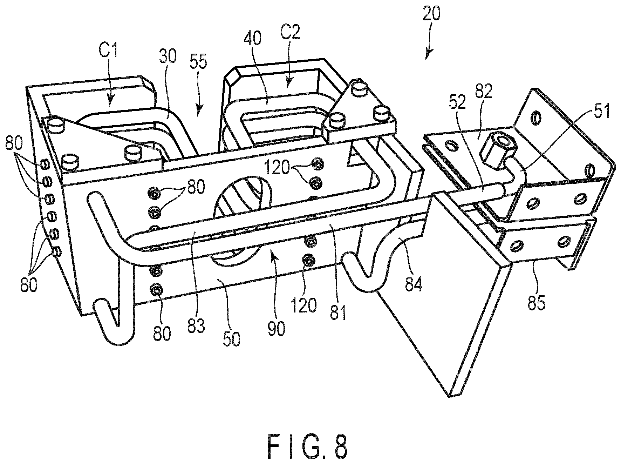

FIG. 6 is a side view of the first coil C1 as seen from the direction of an arrow F6 in FIG. 5. FIG. 7 is a side view of the second coil C2 as seen from the direction of an arrow F7 in FIG. 5. FIG. 8 is a perspective view of the induction heating device 20 assembled in the frame structure 50. The frame structure 50 is made, for example, of an electrically insulating material such as fiber-reinforced plastic (FRP) .

The first coil C1 and the second coil C2 are each constituted by a conductor 51 made of a solid or hollow copper material whose cross section is circular. The first coil C1 and the second coil C2 are each formed by winding the conductor 51 in a left-handed (counterclockwise) direction, for example. The cross-section of the conductor 51 is constant in the length direction of the conductor 51. The cross-section of the conductor 51 may as well be other than circular (for example, quadrangular). The surface of the conductor 51 is covered by an insulating coating member 52 (a part of which is shown in FIGS. 5 and 8) made of an electrical insulating material such as glass fiber or the like.

As shown in FIG. 4, the first coil portion 30 and the second coil portion 40 are 180° rotationally symmetrical with each other about a virtual point Z1 when viewed from above. That is, the shape of the first coil portion 30 rotated by 180° around the virtual point Z1 is substantially equal to that of the second coil portion 40. Note that the first coil portion 30 and the second coil portion 40 may as well have respective shapes which are line symmetrical with each other about the central axis of the workpiece (the stabilizer 4) as the axis of symmetry. The first coil portion 30 and the second coil portion 40 are arranged so that their respective axes X1 and X2 (shown in FIGS. 3 and 4) are parallel to each other. Between the first coil portion 30 and the second coil portion 40, a workpiece placement section 55 is formed. In the workpiece placement section 55, the stabilizer 4, as an example of a bar-shaped workpiece, is inserted. A part (a bush attachment portion) of the stabilizer 4 is placed in the work placement section 55 along the axes X1 and X2.

An example of the specific structure the first coil C1 will now be described with reference to FIGS. 3 to 6.

As shown in FIGS. 3 and 4, the first coil portion 30, which is a main component of the first coil C1, includes a plurality (for example, six) of turn portions 31, 32, 33, 34, 35 and 36. These turn portions 31 to 36 have a common shape when the first coil portion 30 is viewed from the front side, as shown in FIG. 5.

Each of the turn portions 31-36 includes a first side portion 61 opposing the work placement section 55, a second side portion 62 opposing the work placement section 55, an upper third side portion 63, a lower fourth side portion 64, a first corner portion 65, a second corner portion 66, a third corner portion 67 and a fourth corner portion 68.

The first side portion 61, the second side portion 62, the third side portion 63 and the fourth side portion 64 all have substantially straight or nearly straight shapes. The lengths of these side portions 61, 62, 63 and 64 are approximately the same as each other. With this structure, the first coil portion 30 have a shape resembling a rounded regular rectangle when viewed from the front side as shown in FIG. 5. Note here that the first coil portion 30 may as well be of a cylindrical shape.

The first corner portion 65 is formed between the first side portion 61 and the third side portion 63. The second corner portion 66 is formed between the second side portion 62 and the third side portion 63. The third corner portion 67 is formed between the second side portion 62 and the fourth side portion 64. The fourth corner portion 68 is formed between the first side portion 61 and the fourth side portion 64. The corner portions 65 to 68 all have circular arc shapes. The corner portions 65 to 68 may have a shape other than a circular arc (for example, a shape including bending angles close to a right angle).

The turn portions 31 to 36 of the first coil portion 30 are formed to have a predetermined pitch P1 to P5 (shown in FIG. 4) in the direction along the first axis X1. More specifically, a narrow pitch P1 is set by the first turn portion 31 and the second turn portion 32 in one axial end portion of the first coil portion 30. In the other axial end of the first coil portion 30, a narrow pitch P5 is set by the fifth turn portion 35 and the sixth turn portion 36. The pitch P1 and the pitch P5 are equivalent to each other.

In the axial center of the first coil portion 30, a medium pitch P3 is set by the third turn portion 33 and the fourth turn portion 34. The central pitch P3 is greater than or equal to the pitches P1 and P5 in the respective end portions. Note that, preferably, the pitch P3 in the center is greater than the pitches P1 and P5 of the respective end portions.

A wide pitch P2 is set by the second turn portion 32 and the third turn portion 33. Further, by the fourth turn portion 34 and the fifth turn portion 35, a wide pitch P4 is set. The pitch P2 and the pitch P4 are equivalent to each other. Further, the pitches P2 and P4 are greater than the medium pitch P3.

In the above-described manner, first narrow pitch portions 71 and 72 having the smallest pitches P1 and P5, respectively, are formed in the respective end portions of the first coil portion 30. Further, in the center of the first coil portion 30, a first medium pitch portion 75 having the medium pitch P3 is formed. A first wide pitch portion 73 having the pitch P2 is formed between one narrow pitch portion 71 and the medium pitch portion 75. A first wide pitch portion 74 having pitch P4 is formed between the other narrow pitch portion 72 and the medium pitch portion 75.

As shown in FIGS. 3 and 4, the first side portions 61 of the respective turn portions 31 to 36 of the first coil portion 30 are substantially parallel to each other. The third side portions 63 of the respective turn portions 31 to 36 as well are substantially parallel to each other. The fourth side portions 64 of the respective turn portions 31 to 36 are also substantially parallel to each other. In this specification, such an expression as "substantially parallel" covers a concept that includes parallelism in the strict sense of geometry, but also includes errors within a tolerable range, which may occur during the manufacturing process and assembly of the coils C1 and C2.

As the first coil portion 30 is viewed from a direction of a side surface, the first side portion 61 extends in a direction approximately perpendicular to the first axis X1. Therefore, the pitch angle of the first side portion 61 is substantially zero. Further, as the first coil portion 30 is viewed from above as shown in FIG. 4, the third side portion 63 and the fourth side portion 64 each extend in a direction substantially perpendicular to the first axis X1. Therefore, the pitch angles of the third side portion 63 and the fourth side portion 64 as well are substantially zero.

On the other hand, the second side portion 62, which is located on a side opposite to the work placement section 55, has a shape in which a first pitch angle θ1 (shown in part in FIG. 6) varies according to the pitches P1 to P5 of the turn portions 31 to 36. In other words, the first pitch angle θ1 is given to the second side portion 62. Moreover, the pitch angles of the sections which form the wide pitch portions 73 and 74 are greater than those of the portions forming the narrow pitch portions 71 and 72.

To each of the turn portions 31 to 36 of the first coil portion 30, a first positioning member 80 is attached. The first positioning member 80 is formed, for example, by brazing a bolt to the conductor 51. By inserting the first positioning member 80 into a hole formed in the frame structure 50 (shown in FIG. 8) and fixing it to the frame structure 50 by means of a fixing means such as a nut, the pitches P1 to P5 of the first coil portion 30 can be accurately maintained.

One end 30a of the first coil portion 30 is connected to a first electrode member 82 (shown in FIG. 4) via a first feeder conductor 81. The other end 30b of the first coil portion 30 is connected to one end 40a of the second coil portion 40 via a connecting conductor 83. The other end 40b of the second coil portion 40 is connected to a second electrode member 85 (shown in FIGS. 4 and 5) via the second feeder conductor 84. The first electrode member 82 and the second electrode member 85 are connected to an AC power supply 86 for applying high frequency voltage to the first coil C1 and the second coil C2.

The second coil C2 will now be described.

As shown in FIGS. 3 and 4, the second coil portion 40, which is a main component of the second coil C2, includes a plurality (for example, six) of turn portions 41, 42, 43, 44, 45 and 46. These turn portions 41 to 46 have a common shape when the second coil portion 40 is viewed from the front side, as shown in FIG. 5. As shown in FIG. 4, the turn portions 41 to 46 of the second coil portion 40 oppose the turn portions 31 to 36 of the first coil portion 30, respectively.

Each of the turn portions 41 to 46 includes a fifth side portion 101 opposing the work placement section 55, a sixth side portion 102 located on a side opposite to the work placement section 55, an upper seventh side portion 103, a lower eighth side portion 104, a fifth corner portion 105, a sixth corner portion 106, a seventh corner portion 107 and an eighth corner portion 108.

The fifth side portion 101, the sixth side portion 102, the seventh side portion 103 and the eighth side portion 104 all have substantially straight or nearly straight shapes. The lengths of these side portions 101, 102, 103, and 104 are approximately the same as each other. Thus, the second coil portion 40 has a shape resembling a rounded square when viewed from the front side, as shown in FIG. 5. Note that the second coil portion 40 may as well be of a cylindrical shape.

The fifth corner portion 105 is formed between the fifth side portion 101 and the seventh side portion 103. The sixth corner portion 106 is formed between the sixth side portion 102 and the seventh side portion 103. The seventh corner portion 107 is formed between the sixth side portion 102 and the eighth side portion 104. The eighth corner portion 108 is formed between the fifth side portion 101 and the eighth side portion 104. The corner portions 105 to 108 all have circular arc shapes. Note that the corner portions 105 to 108 may have a shape other than a circular arc (for example, a shape including bending angles close to a right angle).

The turn portions 41 to 46 of the second coil portion 40 are formed to have predetermined pitches P6 to P10 (shown in FIG. 4) in the direction along the second axis X2. More specifically, a narrow pitch P6 is set by the first turn portion 41 and the second turn portion 42 in one axial end portion of the second coil portion 40. In the other axial end of the second coil portion 40, a narrow pitch P10 is set by the fifth turn portion 45 and the sixth turn portion 46. The pitch P6 and the pitch P10 are equivalent to each other.

Further, in the axial center of the second coil portion 40, a medium pitch P8 is set by the third turn portions and the fourth turn portion4. The central pitch P8 is greater than the pitches P6 and P10 in the respective end portions. The central pitch P8 is greater than the pitches P6 and P10 of the respective end portions. Preferably, the central pitch P8 should be greater than the pitches P6 and P10 at the respective end portions.

A wide pitch P7 is set by the second turn portion 42 and the third turn portion 43. A larger pitch P9 is set by the fourth turn portion 44 and the fifth turn portion 45. The pitch P7 and the pitch P9 are equivalent to each other. Moreover, the pitches P7 and P9 are wider than the medium pitch P8.

In the manner described above, second narrow pitch portions 111 and 112 having the smallest pitches P6 and P10 are formed in the respective end portions of the second coil portion 40. A second medium pitch portion 115 having the medium pitch P8 is formed in the center of the second coil portion 40. Between one narrow pitch portion 111 and the medium pitch portion 115, a second wide pitch portion 113 having the pitch P7 is formed. A second wide pitch portion 114 having the pitch P9 is formed between the other narrow pitch portion 112 and the medium pitch portion 115.

As shown in FIGS. 3 and 4, the fifth side portions 101 of the respective turn portions 41 to 46 of the second coil portion 40 are substantially parallel to each other. The seventh side portions 103 of the respective turn portions 41 to 46 as well are substantially parallel to each other. The eighth side portions 104 of the respective turn portions 41 to 46 are also substantially parallel to each other.

When the second coil portion 40 is viewed from the direction of the side surface, the fifth side portion 101 extends in a direction approximately perpendicular to the second axis X2. Therefore, the pitch angle of the fifth side portion 101 is substantially zero. Further, when the second coil portion 40 is viewed from above as shown in FIG. 4, the seventh side portion 103 and the eighth side portion 104 each extend in a direction substantially perpendicular to the second axis X2. With this structure, the pitch angles of the seventh side portion 103 and the eighth side portion 104 are substantially zero.

On the other hand, the sixth side portion 102, which is located on a side opposite to the work placement section 55, has a shape in which a second pitch angle θ2 (shown in part in FIG. 7) varies according to the pitches P6 to P10 of the turn portions 41 to 46. In other words, the second pitch angle θ2 is given to the sixth side portion 102. Moreover, the pitch angles of the sections which form the wide pitch portions 113 and 114 are greater than the pitch angles of the sections forming the narrow pitch portions 111 and 112.

A second positioning member 120 is attached to each of the turn portions 41 to 46 of the second coil portion 40. The second positioning member 120 is formed, for example, by brazing a bolt to the conductor 51. By inserting the second positioning member 120 into a hole formed in the frame structure 50 (shown in FIG. 8) and fixing it to the frame structure 50 by means of a fixing means such as a nut, the pitches P6 to P10 of the second coil portion 40 can be accurately maintained.

As shown in FIG. 5, the end portion of the first coil C1 and the end portion of the second coil C2 may be electrically and mechanically connected to each other by a connecting portion 88. In this manner, the first coil C1 and the second coil C2 can be formed separately and then connected to each other by brazing or the like at the connecting portion 88.

FIGS. 3 and 8 show a conductor adjacent portion 90. In the conductor adjacent portion 90, the feeder conductor 81 and the connecting conductor 83 are arranged substantially parallel to each other. The feeder conductor 81 is electrically connected with the first coil portion 30. The connecting conductor 83 is electrically connected with the second coil portion 40. In this specification, such an expression as "substantially parallel" covers a concept that includes parallelism in the strict sense of geometry, but also includes variations in shape which may inevitably occur during the manufacturing process of the coil portions 30 and 40 and errors tolerable in terms of the specification of the product. In the conductor adjacent portion 90, currents (indicated by arrows A1 and A2 in FIG. 3) flow the feeding conductor 81 and the connecting conductor 83 in opposite directions therebetween. With this configuration, the magnetic flux generated in the feeder conductor 81 and the magnetic flux generated in the connecting conductor 83 cancel each other. Thus, it is possible to avoid the magnetic fluxes generated in the feeder conductor 81 and the connecting conductor 83 from adversely affecting the magnetic fields of the coil portions 30 and 40.

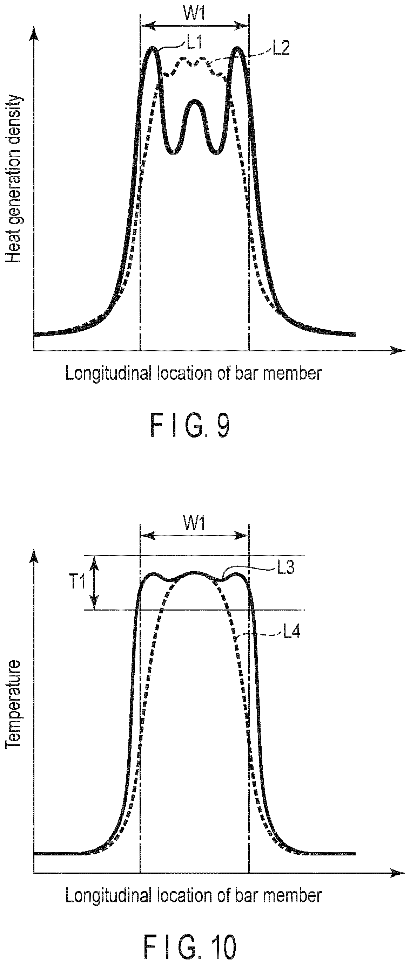

A solid line L1 shown in FIG. 9 indicates the relationship between the longitudinal location of the to-be-heated part and the heat generation density when the to-be-heated part of a bar-shaped workpiece was heated using the induction heating device 20 of this embodiment. The induction heating device 20 of this embodiment includes narrow pitch portions 71 and 72 formed on respective ends of the first coil portion 30, a medium pitch portion 75 formed in the center and wide pitch portions 73 and 74 formed on respective sides of the medium pitch portion 75. The induction heating device 20 further includes narrow pitch portions 111 and 112 formed on respective ends of the second coil portion 40, a medium pitch portion 115 formed in the center and wide pitch portions 113 and 114 formed on respective sides of the medium pitch portion 115. With this structure, the heat generation density by the coil portions 30 and 40 was maximum near both ends of the coil width W1 (shown in FIGS. 4 and 9), and the heat generation density in the center of the coil width W1 was the second highest.

A dashed line L2 shown in FIG. 9 indicates the temperature distribution of the to-be-heated part when a bar-shaped workpiece was heated by a conventional induction heating device (having a constant coil pitch). When a coil having a constant pitch is used for heating, the entire width of the coil is substantially evenly heated.

A solid line L3 shown in FIG. 10 indicates the temperature distribution at the moment when the heating by the induction heating device 20 of this embodiment was stopped. When the heating was stopped, some of the heat near both ends of the to-be-heated part escapes therefrom. Note here that, as shown in FIG. 9, during the heating, the heat generation density near both ends of the coil width W1 was at maximum, and the temperature in the center was also high to some extent. With this configuration, as shown by the solid line L3 in FIG. 10, the temperature of the to-be-heated part after the heating was stopped was equalized and the to-be-heated part was maintained in a predetermined temperature range T1.

A dashed line L4 shown in FIG. 10 indicates the temperature distribution at the moment when the heating by the conventional coil was stopped. As indicated by the dashed line L4, the temperature near both ends of the to-be-heated part escapes to the surroundings and becomes considerably lower than that in the center of the to-be-heated part. Thus, it was difficult to maintain the entire to-be-heated part within the predetermined temperature range T1.

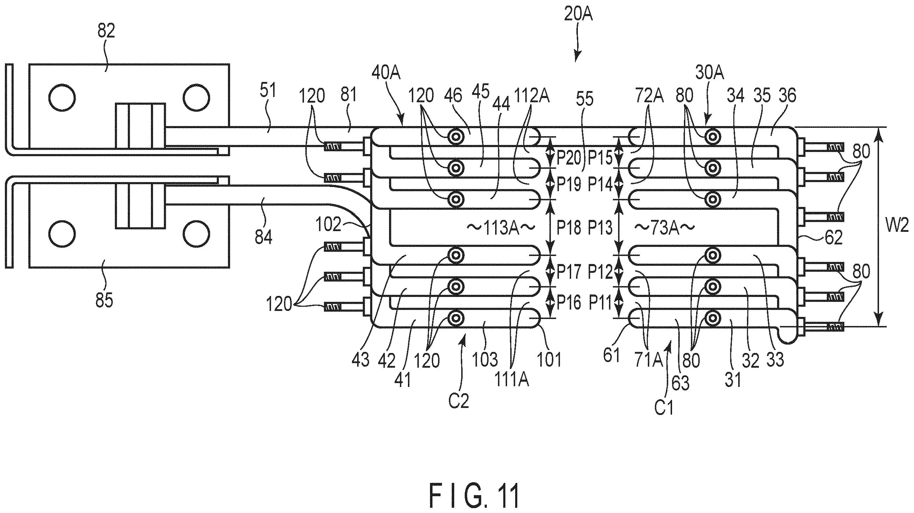

FIG. 11 is a plan view of an induction heating device 20A according to the second embodiment. In a first coil portion 30A of this induction heating device 20A, pitches P11 and P12 in one end portion are narrower than a pitch P13 in the center. Pitches P14 and P15 in the other end portion are narrower than the pitch P13 in the center. That is, first narrow pitch portions 71A and 72A are formed in respective end portions of the first coil portion 30A. A first wide pitch portion 73A is formed between the narrow pitch portions 71A and 72A.

Similarly, in a second coil portion 40A, pitches P16 and P17 in one end portion are narrower than a pitch P18 in the center. Further, pitches P19 and P20 in the other end portion are narrower than the pitch P18 in the center. That is, second narrow pitches portions 111A and 112A are formed in respective end portions of the second coil portion 40A. A second wide pitch portion 113A is formed between the narrow pitch portions 111A and 112A. Other than the above, the induction heating device 20A of the second embodiment has a configuration and effect similar to those of the induction heating device 20 of the first embodiment (FIGS. 3 to 8), common reference symbols to those of the first embodiment will be designated and the explanations thereof will be omitted.

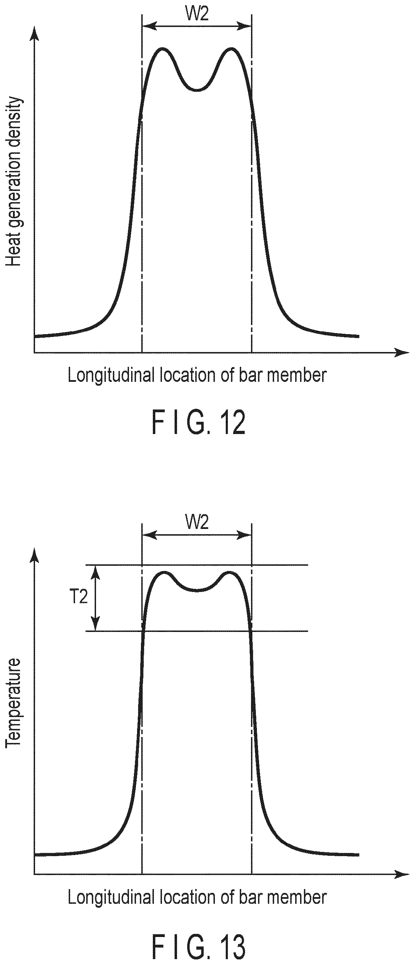

FIG. 12 shows the relationship between the longitudinal location and the heat generation density in the to-be-heated part subjected to heating by the induction heating device 20A. As shown in FIG. 12, when heated by the induction heating device 20A, the heat generation density in both ends of the coil width W2 (shown in FIGS. 11 and 12) is greater than the heat generation density in the center.

FIG. 13 shows the temperature distribution of the to-be-heated part when tens of seconds elapsed after the heating by the induction heating device 20A was stopped. When the heating is stopped, some of the heat near both ends of the to-be-heated part escapes from the to-be-heated part. Note here that, as shown in FIG. 12, the heat generation density near both ends of the coil width W2 is high during the heating. Therefore, as shown in FIG. 13, the temperature of the to-be-heated part after heating was stopped was maintained within a predetermined temperature range T2.

### Industrial applicability

In implementing the present invention, the number of turn portions of the first coil portion and the second coil portion may be other than six. Further, if necessary, there may be a plurality of medium pitch portions provided. The bar-shaped workpiece is not limited to stabilizers for vehicles, and in short, the induction heating device of the present invention can be applied to any bar-shaped workpiece that needs to be heated in part of its length direction.

### Reference Signs List

4 ... Stabilizer (bar-shaped workpiece), 20, 20A ... Induction heating device, C1 ... First coil, C2 ... Second coil, 30, 30A ... First coil portion, X1 ... First axis, 31 to 36 ... turn portion, 40, 40A ... Second coil portion, X2 ... Second axis, 41 to 46 ... turn portion, 50 ... Frame structure 51 ... Conductor, 55 ... Work placement section, 61 ... First side portion, 62 ... Second side portion, 63 ... Third side portion, 64 ... Fourth side portion, 71, 71A, 72, 72A ... Narrow pitch portion, 73, 73A, 74 ... Wide pitch portion, 75 ... Medium pitch portion, 80 ... First positioning member, 81 ... Feeder conductor, 82 ... First electrode member, 83 ... Connecting conductor, 84 ... Feeder conductor, 85 ... Second electrode member, 90 ... Conductor adjacent portion, 101 ... Fifth side portion, 102 ... Sixth side portion, 103 ... Seventh side portion, 104 ... Eighth side portion, 111, 111A, 112, 112A ... Small pitch portion, 113, 113A, 114 ... Wide pitch portion, 115 ... Medium pitch portion, 120 ... Second positioning member.

## Claims

1. An induction heating device for heating a to-be-heated part of a bar-shaped workpiece, comprising:
a first coil (C1) including a first coil portion (30)(30A) comprising a plurality of turn portions and having a first axis (X1) passing through a center of the first coil portion (30)(30A);
a second coil (C2) disposed to oppose the first coil (C1), including a second coil portion (40)(40A) comprising a plurality of turn portions, and having a second axis (X2) passing through a center of the second coil portion (40)(40A);
a workpiece placement section (55) formed between the first coil portion (30)(30A) and the second coil portion (40)(40A), into which a bar-shaped workpiece is inserted;
a pair of first narrow pitch portions (71,72)(71A,72A) formed in respective end portions of the first coil portion (30)(30A);
at least one first wide pitch portion (73,74) (73A) formed between the pair of first narrow pitch portions (71,72) (71A,72A) and having a pitch greater than that of the first narrow pitch portions (71,72) (71A,72A);
a pair of second narrow pitch portions (111,112) (111A,112A) formed in respective end portions of the second coil portion (40)(40A); and
at least one second wide pitch portion (113,114)(113A) formed between the pair of second narrow pitch portions (111,112)(111A,112A) and having a pitch wider than that of the second narrow pitch portions (111,112)(111A,112A).

2. The induction heating device according to claim 1, comprising:
a first medium pitch portion (75) formed in a center of the first coil portion (30)(30A) and having a pitch wider than that of the first narrow pitch portion (71,72)(71A,72A) and narrower than that of the first wide pitch portion (73,74)(73A); and
a second medium pitch portion (115) formed in a center of the second coil portion (40)(40A) and having a pitch wider than that of the second narrow pitch portions (111,112)(111A,112A) and narrower than that of the second wide pitch portions (113,114)(113A).

3. The induction heating device according to claim 1, wherein
each of the turn portions of the first coil portion (30)(30A) includes a first side portion (61) opposing the workpiece placement section (55), a second side portion (62) on a side opposite to the workpiece placement section (55), an upper third side (63), and a lower fourth side portion (64),
the first side portions (61) are parallel to each other and the first side portions (61) extend in a direction perpendicular to the first axis (X1) as the first coil portion (30)(30A) is viewed from a side,
each of the turn portions of the second coil portion (40)(40A) includes a fifth side portion (101) opposing the workpiece placement section (55), a sixth side (102) on a side opposite to the workpiece placement section (55), an upper seventh side (103), and a lower eighth side (104), and
the fifth side portions (101) are parallel to each other and the fifth side portions (101) extend in a direction perpendicular to the second axis (X2) as the second coil portion (40)(40A) is viewed from a side.

4. The induction heating device according to claim 3, wherein
the third side portions (63) are parallel to each other and the third side portions (63) extend in a direction perpendicular to the first axis (X1), and the fourth side portions (64) are parallel to each other and the fourth side portions (64) extend in a direction perpendicular to the first axis (X1), as the first coil portion (30)(30A) is viewed from above,
the second side portion (62) has a first pitch angle (θ1) according to the first narrow pitch portions (71,72)(71A,72A) and the first wide pitch portions (73,74)(73A) as the first coil portion (30)(30A) is viewed from the side,
the seventh side portions (103) are parallel to each other and the seventh side portions (103) extend perpendicular to the second axis (X2) and the eighth side portions (104) are parallel to each other and the eighth side portions (104) extend perpendicular to the second axis (X2), as the second coil portion (40)(40A) is viewed from above, and
the sixth side portion (102) has a second pitch angle (θ2) according to the second narrow pitch portions (111,112) and the second wide pitch portions (113,114)(113A), as the second coil portion (40)(40A) is viewed from the side.

5. The induction heating device according to claim 1, comprising:
a frame structure (50) made of an electrically insulating material;
a first positioning member (80) provided on each of the turn portions of the first coil portion (30)(30A) and fixed to the frame structure (50); and
a second positioning member (120) provided on each of the turn portions of the second coil portion (40)(40A) and fixed to the frame structure (50).

6. The induction heating device according to claim 1, comprising:
a feeder conductor (81) electrically connected with the first coil portion (30)(30A);
a connecting conductor (83) electrically connecting the first coil portion (30)(30A) and the second coil portion (40)(40A) to each other; and
a conductor adjacent portion (90) in which the feeder conductor (81) and the connecting conductor (83) are arranged adjacent to each other and extend in a same direction and a direction of current flowing through the feeder conductor (81) and a direction of current flowing through the connecting conductor (83) are opposite to each other.

7. A heating method for inductively heating a to-be-heated part of a stabilizer by placing the to-be-heated part between a first coil (C1) and a second coil (C2) and applying a high frequency voltage to the first coil (C1) and the second coil (C2),
the first coil (C1) including a pair of first narrow pitch portions (71,72)(71A,72A) and a first wide pitch portion (73,74)(73A) formed between the first narrow pitch portions (71,72)(71A,72A), and
the second coil (C2) including a pair of second narrow pitch portions (111,112)(111A,112A) and a second wide pitch portion (113,114)(113A) formed between the second narrow pitch portions (111,112)(111A,112A),
the method comprising:
applying the high frequency voltage to the first coil (C1) and the second coil (C2);
inductively heating both end portions of the to-be-heated part by the first narrow pitch portions (71,72)(71A,72A) and the second narrow pitch portions (111,112)(111A,112A) and inductively heating a middle portion of the to-be-heated part by the first wide pitch portion (73,74)(73A) and the second wide pitch portion (113,114)(113A), thereby increasing a heat generation density of both end portions of the to-be-heated part to be higher than a heat generation density of the middle portion; and
stopping the inductively heating while the heat generation density of both end portions is higher than that of the middle portion.
